Europäisches Patentamt

European Patent Office

Office européen des brevets

(11) Numéro de publication: **0 136 193**
**A1**

(12) **DEMANDE DE BREVET EUROPEEN**

(21) Numéro de dépôt: **84401336.7**

(22) Date de dépôt: **26.06.84**

(51) Int. Cl.⁴: **G 02 B 6/24**

(30) Priorité: **04.07.83 FR 8311074**

(43) Date de publication de la demande: **03.04.85**
**Bulletin 85/14**

(84) Etats contractants désignés: **DE GB IT NL SE**

(71) Demandeur: **THOMSON-CSF, 173, Boulevard Haussmann, F-75379 Paris Cedex 08 (FR)**

(72) Inventeur: **Le Pesant, Jean-Pierre, THOMSON-CSF SCPI 173, bld Haussmann, F-75379 Paris Cedex 08 (FR)**
Inventeur: **Hareng, Michel, THOMSON-CSF SCPI 173, bld Haussmann, F-75379 Paris Cedex 08 (FR)**
Inventeur: **Huignard, Jean-Pierre, THOMSON-CSF SCPI 173, bld Haussmann, F-75379 Paris Cedex 08 (FR)**
Inventeur: **Herriau, Jean-Pierre, THOMSON-CSF SCPI 173, bld Haussmann, F-75379 Paris Cedex 08 (FR)**
Inventeur: **Mourey, Bruno, THOMSON-CSF SCPI 173, bld Haussmann, F-75379 Paris Cedex 08 (FR)**
Inventeur: **Perbet, Jean-Noel, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

(54) **Dispositif de commutation optique à déplacement de fluide et dispositif de composition d'une ligne de points.**

(57) L'invention se rapporte aux dispositifs de commutation d'un faisceau lumineux.

L'invention a pour objet de modifier localement et par commande électrique, les conditions de propagation d'un faisceau lumineux par interposition sur son trajet d'un fluide modifiant les conditions de réfraction du milieu traversé par le faisceau.

L'invention s'applique notamment à la commutation de lumière entre fibres optiques (30, 31, 32) et aux dispositifs de reproduction d'images.

EP 0 136 193 A1

## DISPOSITIF DE COMMUTATION OPTIQUE A DEPLACEMENT
## DE FLUIDE ET DISPOSITIF DE COMPOSITION
## D'UNE LIGNE DE POINTS

La présente invention se rapporte aux dispositifs de commutation rapide d'un faisceau lumineux, en particulier lorsque ce faisceau lumineux transporte des informations codées. Une des applications particulières de l'invention est la commutation de lumière entre des fibres optiques.

Quelques solutions au problème de la commutation optique existent actuellement mais elles se heurtent à d'importantes difficultés d'utilisation, de mise en oeuvre dans des dispositifs à faisceaux multiples et de miniaturisation, notamment lorsque de tels dispositifs sont basés sur les mouvements de miroirs commandés par des impulsions électromécaniques.

Parmi les dispositifs de l'art connu, on peut citer des structures utilisant le multiplexage en longueurs d'ondes permettant d'offrir à des abonnés plusieurs services de type vidéocommunications sur une seule fibre optique multimode. Ces structures reposent sur le principe de la déviation spatiale d'un faisceau optique par des miroirs qui assurent les fonctions de multiplexage. Ces structures nécessitent plusieurs faisceaux optiques de longueurs d'ondes différentes, des miroirs constitués par des lames semi-réfléchissantes qui introduisent des pertes et dont les dimensions ne sont pas négligeables (à peine inférieures au centimètre carré).

On connaît également des dispositifs où la déviation de faisceaux lumineux est provoquée par la réflexion totale de la lumière dans des cristaux électro-optiques. Un dispositif de ce type est décrit dans l'article "Linear total internal reflection spatial light modulator for laser printing" de SPRAGUE, TURNER et FLORES, paru dans la revue SPIE, Vol. 299 Advances in Laser Scanning Technology (1981), p. 68-75. L'inconvénient de ces dispositifs réside dans le cristal lui-même, généralement du niobate de lithium. Pour des questions de pureté, celui-ci n'est disponible qu'en petites dimensions, ce qui implique que le pas des électrodes qu'il supporte et qui servent à lui appliquer un champ électrique de commande, sera très petit. Par conséquent, le dispositif aura besoin de systèmes optiques importants.

De plus, le cristal réagit faiblement au champ électrique ce qui implique des tensions de commande importantes.

Afin de pallier ces inconvénients, l'invention propose d'utiliser les mouvements de très petits volumes de liquide, commandés électriquement, sans intervention d'organes mécaniques mobiles, pour modifier localement les conditions de réfraction rencontrées par les faisceaux lumineux qui se propagent dans le dispositif. Ces modifications de réfraction permettent de déplacer les trajets des faisceaux lumineux et de réaliser ainsi la commutation entre diverses voies de propagation, notamment entre des fibres optiques. Les dispositifs de commutation réalisables selon l'invention comportent des moyens de commande électrique de déplacement de liquide qui permettent de faire couler de très petits volumes de ce liquide ou globules d'une région à une autre sous l'action de forces motrices d'origine électrique dues à des variations locales de champ électrique consécutives à l'application sur des électrodes de contrôle d'échelons de tension.

L'invention a donc pour objet un dispositif de commutation optique d'au moins un faisceau lumineux incident par des moyens commutateurs à commande électrique, les moyens commutateurs consistant à placer sur le trajet dudit faisceau soit un premier fluide provoquant la réflexion du faisceau, soit un second fluide provoquant sa transmission, lesdits fluides étant contenus dans un espace de confinement défini par des éléments transparents et n'étant pas miscibles, l'un desdits fluides ayant une structure globulaire noyée dans la structure lacunaire de l'autre fluide, caractérisé en ce que les fluides sont des fluides diélectriques possédant des permittivités diélectriques distinctes, le dispositif comprenant également des moyens inducteurs d'un gradient de champ électrique faisant converger le fluide ayant la plus forte permittivité vers une région de l'espace de confinement soumise au champ électrique.

L'invention a aussi pour objet un dispositif de composition d'une ligne de points, caractérisé en ce qu'il comprend un dispositif de commutation optique tel que défini ci-dessus et des moyens optiques permettant d'impressionner un plan de projection.

0136193

3

L'invention sera mieux comprise et d'autres avantages apparaîtront au moyen de la description qui va suivre et des figures annexées parmi lesquelles :

- les figures 1 et 2 sont des figures explicatives ;
- la figure 3 est une vue isométrique d'un dispositif à commande électrique de déplacement de globules ;
- la figure 4 est une figure explicative ;
- les figures 5 et 6 représentent des dispositifs de commutation optique selon l'invention ;
- la figure 7 représente une configuration d'électrodes ;
- la figure 8 représente un dispositif de compositsion d'une ligne des points lumineux, selon l'invention.

Selon les modes préférés de réalisation et de mise en oeuvre de l'invention, les électrodes de contrôle sont disposées face à face en couples, de façon à constituer des condensateurs qui délimitent le volume d'influence du champ électrique engendré par la différence de potentiel établie entre les électrodes du couple considéré. Dans le but d'utiliser convenablement les forces de tension superficielle et de capillarité, on préfère, dans le cadre de l'invention, utiliser des couples d'électrodes de commande séparés par de faibles distances, typiquement de 1 $\mu$m à 1 mm. Les volumes de liquide que l'on déplace grâce à l'action des couples d'électrodes peuvent avantageusement être fractionnés en globules distincts, assimilables à des "gouttes" écrasées entre les surfaces de confinement qui portent les électrodes de commande. Le fonctionnement selon l'invention utilise la possibilité d'enduire les surfaces de confinement d'un revêtement non-mouillant qui empêche l'étalement excessif, sous forme d'un film mince, du liquide dont on veut contrôler la position. Le liquide étant ainsi fractionné en globules distincts, l'invention utilise la possibilité de déplacer, uniquement par des moyens électriques, chacun de ces globules d'une position stable à une autre position stable. La stabilité de ces positions est obtenue d'une part, par des effets de capillarité et d'inertie liés à la géométrie et aux dimensions des dispositifs réalisables selon l'invention, et d'autre part par l'application des potentiels électriques appropriés, aux couples d'électrodes.

4

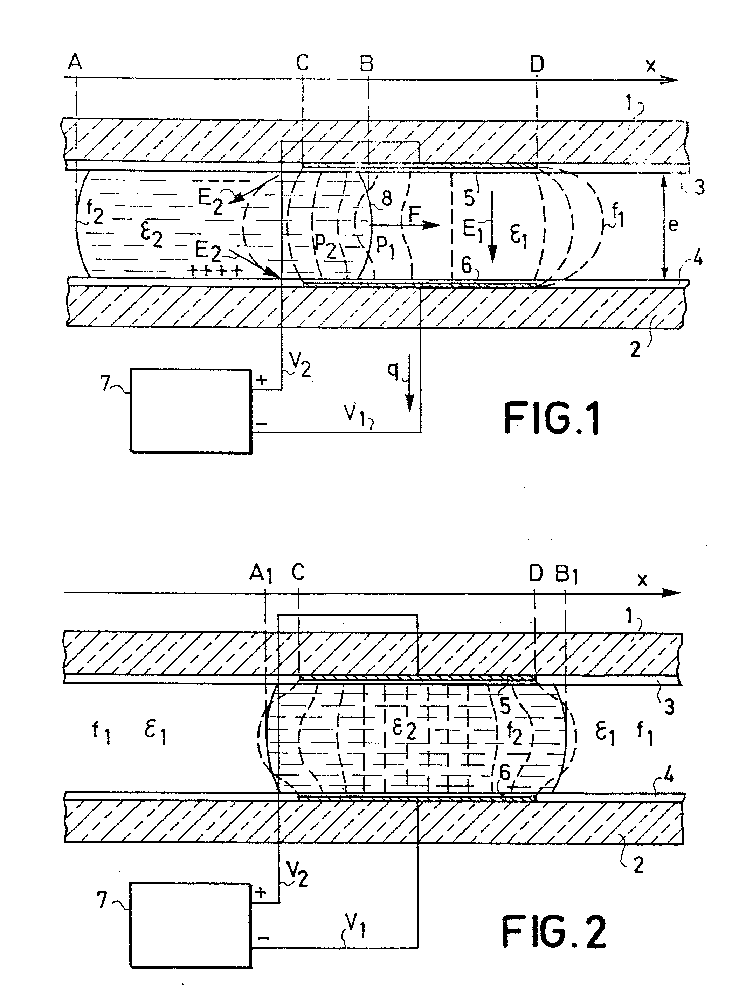

Le déplacement d'un ou plusieurs globules fluides d'une position à une autre et l'origine physique des forces qui permettent de provoquer et de contrôler ces déplacements ont été décrits dans une demande de brevet de la Demanderesse déposée le 23 Mars 1983 et portant le numéro national 83.04 745. Les figures 1 à 3 rappellent l'explication physique donnée dans la demande de brevet susmentionnée.

Dans sa forme la plus rudimentaire illustrée sur la figure 1, le dispositif à commande électrique de déplacement d'un fluide comporte un espace capillaire de hauteur e où l'on fait cohabiter deux fluides diélectriques non-miscibles. L'espace capillaire est délimité par deux plaques rigides de confinement 1 et 2 par exemple en verre. La hauteur e est choisie égale ou inférieure au millimètre, afin que les phénomènes de capillarité prennent le pas sur les forces gravitationnelles. Les faces internes des plaques 1 et 2 ont subi une préparation qui consiste en des nettoyages appropriés et des dépôts de surface 3 et 4 qui doivent éviter la formation de films capillaires par le ou les liquides dont on souhaite contrôler électriquement le déplacement. A titre d'exemple non limitatif, l'espace capillaire situé entres les dépôts 3 et 4 est occupé par un fluide gazeux ou une vapeur $f_1$ de permittivité diélectrique $\varepsilon_1$. Dans une partie du volume de l'espace capillaire, un second fluide liquide $f_2$ est introduit. Le second fluide $f_2$ dispose d'une permittivité diélectrique $\varepsilon_2$ supérieure à $\varepsilon_1$ et il prend la forme d'un globule qui s'étend par exemple entre les abscisses A et B. Pour réaliser électriquement le déplacement du globule $f_2$ dans la direction positive de l'axe x, il est prévu de munir les faces internes des plaques 1 et 2 d'un couple d'électrodes 5 et 6 qui sont recouvertes notamment par les dépôts 3 et 4. Ces électrodes 5 et 6 qui occupent une région située entre les abscisses décalées CD sont reliées à un générateur électrique 7 qui délivre des potentiels $V_2$ et $V_1$ dont la différence produit des forces volumiques qui rapportées à l'interface 8 équivalent à une force motionnelle F.

L'origine physique de la force motionnelle F s'explique par la présence au sein des milieux matériels de charges électriques positives et négatives qui peuvent être libres ou liées. En présence d'un champ électrique inducteur $E_0$, les charges libres peuvent se déplacer dans l'ensemble du volume de matière soumis au champ électrique, ce qui constitue le phénomène de conduction électrique. Ce phénomène n'est pas exploité dans le cadre de la présente invention bien qu'une faible conductivité des fluides utilisés puisse être acceptée. Par contre, les charges électriques liées aux atomes et molécules donnent naissance à des moments dipolaires électriques. Le milieu matériel réagit au champ électrique inducteur $\vec{E_o}$ par une polarisation électrique $\vec{P}$ qui est la somme sur le volume soumis au champ des moments dipolaires induits et de ceux qui préexistent du fait des symétries particulières des molécules.

Ce comportement diélectrique s'exprime par la relation vectorielle $\vec{E} = \vec{E_o} + \overline{\vec{E'}}$ où $\overline{\vec{E'}}$ est le champ électrique dû à la polarisation $\vec{P}$ et $\vec{E}$ le champ électrique résultant dans le milieu matériel.

Le comportement diélectrique d'un milieu matériel est donné par une relation tensorielle qui s'écrit $P_u = X_{uv} E^v$ où $X_{uv}$ est le tenseur de susceptibilité électrique. Pour un milieu diélectrique isotrope, on dispose d'une relation plus simple qui est $\vec{P} = (\varepsilon - \varepsilon_o) \vec{E}$ où $\varepsilon_o$ est la permittivité du vide et $\varepsilon$ celle du diélectrique. Dans ce cas, la force $\vec{F}$ qui s'exerce sur un milieu de volume v soumis au champ $\vec{E_o}$ s'exprime par :

$$\vec{F} = \int_v (\vec{P} \cdot \overrightarrow{\text{grad}}) \; \vec{E_o} \; dv. \qquad (1)$$

Cette force est volumique et d'autant plus grande que la polarisation est forte et que le gradient de champ est important.

L'application de cette relation à des milieux hétérogènes soumis à des champs électriques non-uniformes permet de dégager une force de déplacement d'origine volumique capable de vaincre des forces de rappel telles que les forces de tension superficielle.

Dans le dispositif de la figure 1, les fluides $f_1$ et $f_2$ sont choisis de telle façon que la polarisation électrique résultante dans le fluide $f_2$ soit supérieure à celle du fluide $f_1$. Ainsi la force $\vec{F_2}$ calculée par la relation (1) pour le fluide $f_2$ dépasse en module la force $\vec{F_1}$ calculée par la même relation pour le fluide $f_1$. Ceci entraîne sur la surface de séparation 8 des deux fluides une surpression $p_2$ du côté de $f_2$ supérieure à la surpression $p_1$ du côté de $f_1$. Tout se passe comme si une force motionnelle F agissait sur la surface de séparation 8. A condition que les forces s'opposant au

6

mouvement, c'est-à-dire les forces de capillarité, de tension superficielle et interfaciale et de viscosité soient vaincues, le fluide $f_2$ chasse le fluide $f_1$ pour occuper la portion de volume située entre les électrodes 5 et 6. Ce travail correspond à la fourniture d'énergie électrique par le générateur 7 qui débite une quantité d'électricité q sous une différence de potentiel $V_2 - V_1$ car la capacité électrique du condensateur formé par les électrodes 5 et 6 a augmenté, alors qu'on maintenait constante la différence de potentiel entre ses armatures. Pour rendre plus clair le fonctionnement qui consiste en l'aspiration électrostatique du globule $f_2$ dans l'espace situé entre les électrodes, on a tracé en pointillé sur la figure 1 les lignes de champ électrique avec les vecteurs champ électrique $E_1$ et $E_2$ et les charges liées + et – engendrées par la polarisation du fluide $f_2$.

La figure 2 représente l'état final. On voit que le globule $f_2$ est venu occuper la région délimitée par les abscisses $A_1$ et $B_1$ qui s'étend symétriquement par rapport à la région CD garnie d'électrodes. Le globule déplacé dans la région $A_1B_1$ peut rester captif du fait du maintien d'une différence de potentiel $V_2 - V_1$.

Il est prévu que la suppression de la différence de potentiel laisse subsister une force de rappel maintenant le globule captif de la zone située entre les électrodes. En effet, les dépôts 3 et 4 sont suffisamment minces pour que les forces moléculaires agissent entre la matière des électrodes 5 et 6 et le fluide $f_2$ en vue de le fixer à l'emplacement illustré sur la figure 2. Le générateur 7 est impuissant à déloger le globule $f_2$ de la zone de capture où il est venu se placer.

La réversibilité du déplacement d'un globule peut être envisagée grâce à des dispositions particulières d'électrodes.

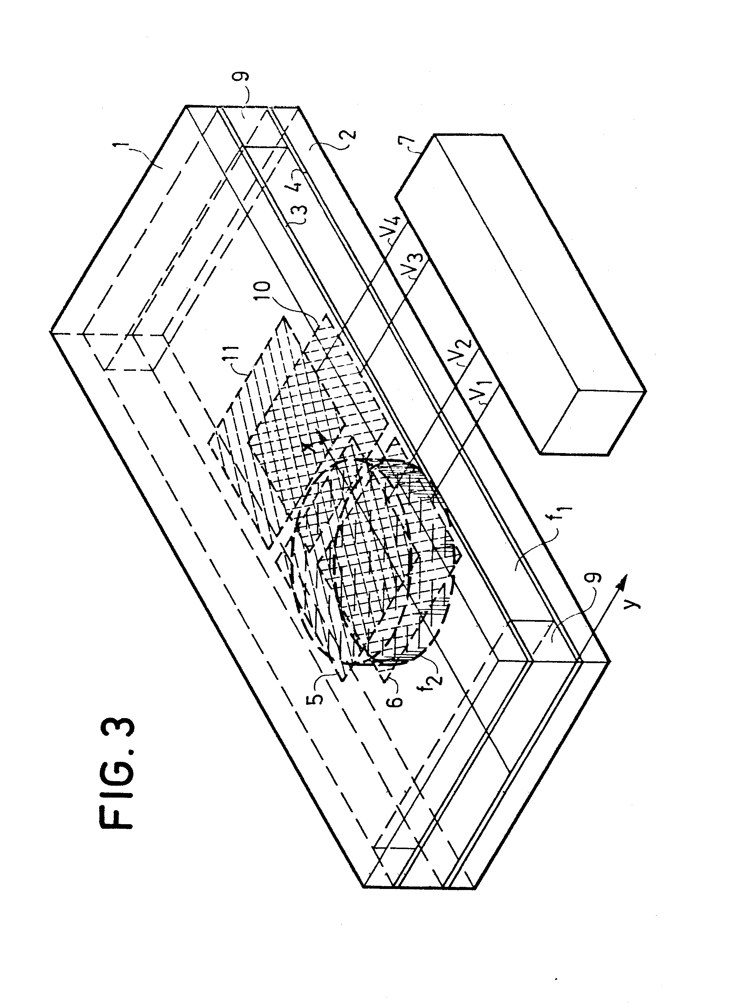

Sur la figure 3, on peut voir une vue isométrique d'un dispositif à commande électrique de déplacement de globules. Les mêmes références désignent les mêmes éléments que sur les figures 1 et 2. Les plaques ou lames 1 et 2 sont séparées par des entretoises 9 et l'on aperçoit un deuxième couple d'électrodes 10 et 11 faisant suite dans la direction de l'axe x au couple d'électrodes 5 et 6. Le générateur électrique 7 fournit des potentiels $V_3$ et $V_4$ aux électrodes 10 et 11. La figure 3 montre en pointillé le contour circulaire d'un globule de fluide $f_2$ susceptible de se mouvoir dans l'étendue du plan xy. Les électrodes 5, 6, 10 et 11 ont par exemple une forme carrée dont le côté a une longueur comprise entre 100 microns et 10 millimètres. Les entretoises 9 ont une hauteur de 5 à 10 microns et l'intervalle séparant l'électrode 5 de l'électrode 11 est égal à 20 microns. Le fluide $f_1$ qui entoure le globule $f_2$ est de l'air et le fluide $f_2$ est choisi parmi les hydrocarbures tels que des alcanes comprenant de 5 à 25 atomes de carbone, des cétones (acétone, cyclohexanone, méthyléthylcétone) ou des dérivés nitrés (nitrobenzène, nitrotoluène). L'utilisation de mélanges de liquides pour constituer le fluide de type $f_2$ permet de contrôler la tension superficielle, d'éviter la dislocation des globules lors de leur déplacement et d'optimiser le temps de réponse du dispositif aux commandes électriques.

Le générateur électrique 7 peut fournir des différences de potentiel $V_2 - V_1$ et $V_4 - V_3$ de l'ordre de 100 à 300 volts pour créer des champs électriques de déplacement de l'ordre de $5.10^6$ à $6.10^7$ volts par mètre. Le volume du globule de fluide $f_2$ pincé entre les plaques 1 et 2 est calibré de manière à déborder légèrement le contour des électrodes 5 et 6, mais il pourrait également être augmenté pour empiéter sur le couple d'électrodes 10 et 11.

Pour faire passer le globule $f_2$ de l'espace interélectrode 5, 6 à l'espace interélectrode 10, 11, on annule ou on diminue la différence de potentiel $V_2 - V_1$ et l'on établit la différence de potentiel $V_4 - V_3$. On réalise ainsi un pas de progression dans la direction positive de l'axe x. Pour faire revenir le globule à sa position d'origne, il faut annuler ou réduire la différence de potentiel $V_4 - V_3$ et rétablir la différence de potentiel $V_2 - V_1$. Si les deux différences de potentiel sont appliquées en même temps, le globule ne tend pas à se déplacer, mais s'il déborde un jeu d'électrodes il peut se déformer pour tenter d'épouser le mieux possible la somme des étendues des électrodes 5 et 11.

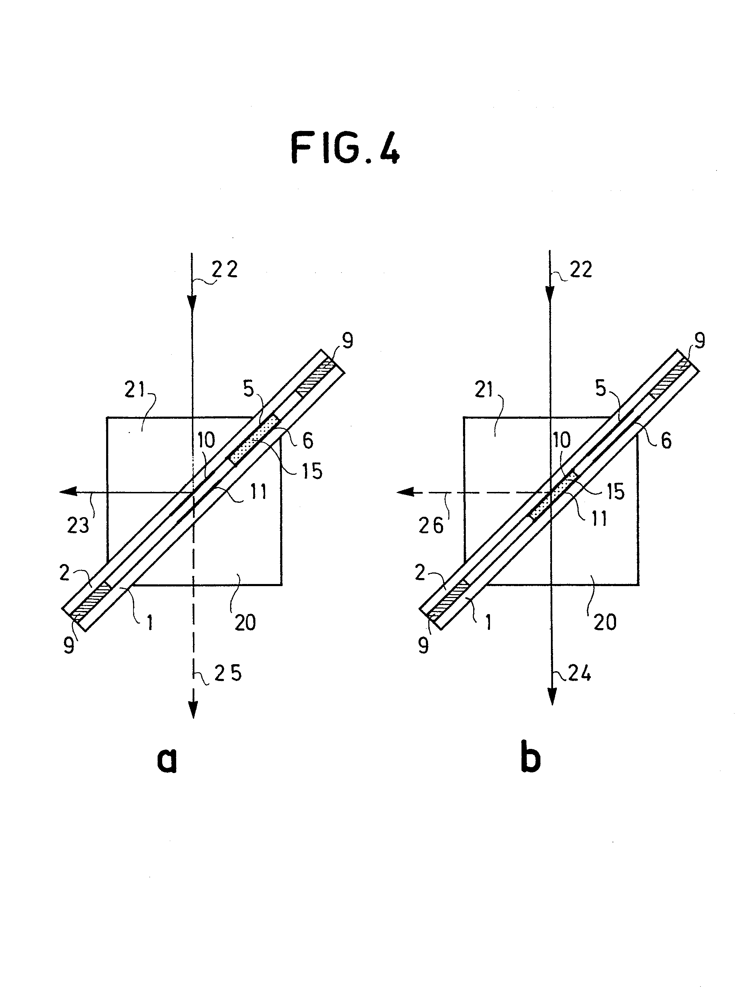

La figure 4 est une vue schématique en coupe d'un dispositif de commutation optique selon l'invention. La figure 4 comprend deux parties (a) et (b) qui montrent la modification du trajet d'un faisceau lumineux incident au dispositif en fonction de la présence ou de l'absence d'un globule sur ce trajet. Dans les figures 4(a) et 4(b), le dispositif est vu en coupe transversale. Le dispositif de commutation optique comprend le dispositif de

8

déplacement de globules de la figure 3 où les mêmes références désignent les mêmes éléments. Les électrodes 5, 6, 10 et 11 sont constituées d'une couche d'un matériau transparent, par exemple en oxyde mixte d'étain et d'indium. Elles sont reliées à des générateurs de tension selon l'enseignement de la figure 3. Le dispositif de déplacement de globules comprend également des dépôts de surface non représentés qui évitent la formation de films capillaires par le liquide à déplacer. Le globule 15 à déplacer est un liquide choisi parmi les hydrocarbures cités plus haut. Le second fluide du dispositif peut être tout simplement de l'air. Sur les faces extérieures des lames de verre sont collés des prismes à réflexion totale 20 et 21. Les collages sont réalisés de sorte qu'il y ait adaptation d'indices entre les prismes 20 et 21 et les lames 1 et 2. Un faisceau lumineux 22 est envoyé sous incidence oblique en direction de l'électrode 10. L'obliquité du faisceau 22 est choisie de façon à permettre la possibilité d'une réflexion totale sur la face interne de la lame 2. Le faisceau traverse le prisme 21 et parvient sur la face interne de la lame 2. Deux cas peuvent alors se produire suivant la nature du fluide compris entre les électrodes 10 et 11.

Le faisceau lumineux 22 est réfléchi en un faisceau 23 lorsque le volume contrôlé par les électrodes 10 et 11 est occupé par un gaz tel que l'air dont l'indice de réfraction optique est de l'ordre de 1, alors que celui du verre de la lame 2 est de l'ordre de 1,5. C'est ce qui est représenté à la figure 4(a).

Si le volume contrôlé par les électrodes 10 et 11 est occupé par le globule 15 initialement situé entre les électrodes 5 et 6, l'indice de réfraction de cette région passe à une valeur qui est typiquement comprise entre 1,4 et 1,7. Dans ces conditions, la réflexion totale sur la face interne de la lame de verre 2 est supprimée et le faisceau 22 est transmis en un faisceau 24 comme le montre la figure 4(b).

Dans le cas de la figure 4(a), l'extinction dans la direction 25 est inférieure à $10^{-4}$ de l'intensité du faisceau incident 22 et l'intensité du faisceau réfléchi 23 représente 90 % de l'intensité du faisceau 22. Dans le cas de la figure 4(b), l'extinction dans la direction 26 est de l'ordre de $5.10^{-3}$ de l'intensité du faisceau incident 22 et l'intensité du faisceau transmis 24 représente 90 % de l'intensité du faisceau 22.

Des traitements de surface anti-reflet et d'adaptation d'indices, notamment entre les lames de verre et les électrodes transparentes, dont l'indice de réfraction est généralement égal ou supérieur à 2, et entre ces électrodes et le liquide à déplacer, permettent d'améliorer l'extinction dans la direction 25 dans le cas de la figure 4(a) et la transmission du faisceau dans le cas de la figure 4(b). Une adaptation de l'épaisseur des électrodes transparentes permet également de contribuer à ce résultat. Il est à remarquer que, dans les deux cas de figure, le prisme 21 n'est pas indispensable. Il améliore cependant les conditions de transmission du faisceau lumineux incident en éliminant les réflexions parasites. Le prisme 20, par contre, est indispensable si l'on désire transmettre un faisceau lumineux dans la direction 25. Il est avantageux, pour les mêmes raisons, que les prismes présentent par rapport aux faisceaux lumineux entrant et sortant, des faces perpendiculaires à ces rayons.

C'est donc un dispositif de commutation optique que l'on a réalisé. Un faisceau lumineux pouvant être dirigé suivant deux directions possibles nettement définies.

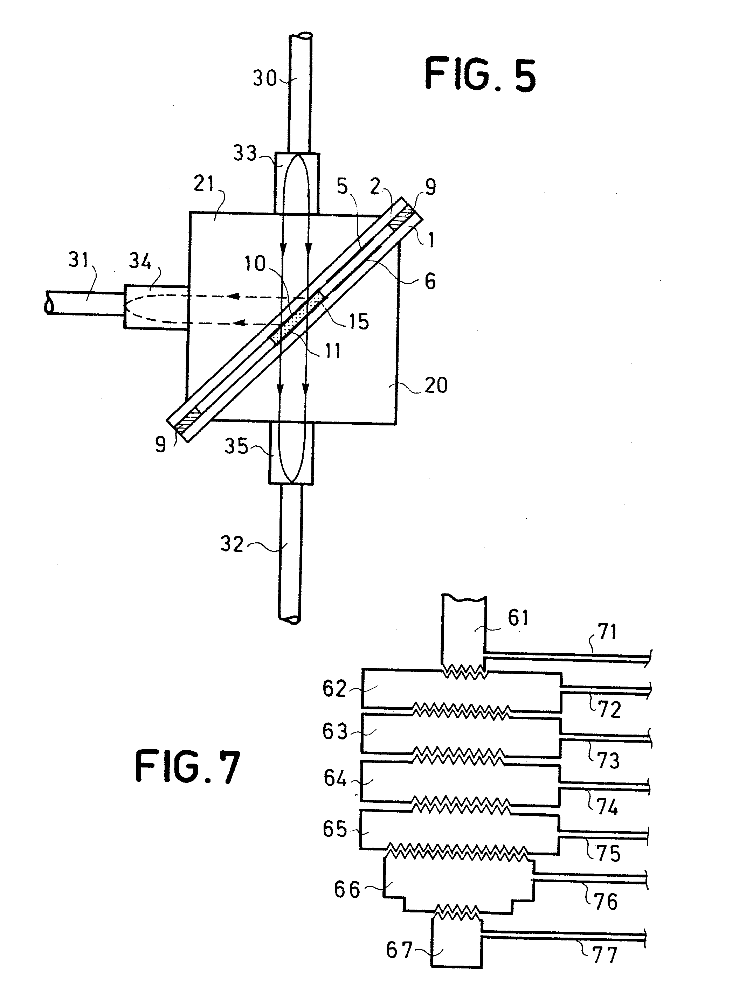

La figure 5 représente un dispositif de commutation optique selon l'invention, où les faisceaux lumineux sont véhiculés par des fibres optiques. Le fonctionnement de ce dispositif est le même que celui décrit pour la figure 4 et les mêmes références désignent les mêmes éléments. Les prismes 20 et 21 ayant une section en forme de triangle rectangle isocèle, les faisceaux lumineux entrent et sortent du dispositif perpendiculairement aux faces des prismes correspondantes. La fibre optique 30 est une fibre incidente qui propage le faisceau lumineux destiné à être soit transmis, soit réfléchi. Un faisceau réfléchi est recueilli par la fibre réceptrice 31 ;un faisceau transmis est recueilli par la fibre réceptrice 32. Les faisceaux lumineux sont collimatés par des lentilles 33, 34, 35 du type à gradient d'indice, collées sur les prismes. On a figuré en traits pleins le trajet d'un faisceau transmis (lorsque le globule 15 est situé entre les électrodes 10 et 11) et en trait pointillé le trajet d'un faisceau réfléchi (lorsque le globule 15 est situé entre les électrodes 5 et 6). On pourrait également imaginer un dispositif sans lames de verre et où les électrodes seraient déposées directement sur les faces internes des prismes.

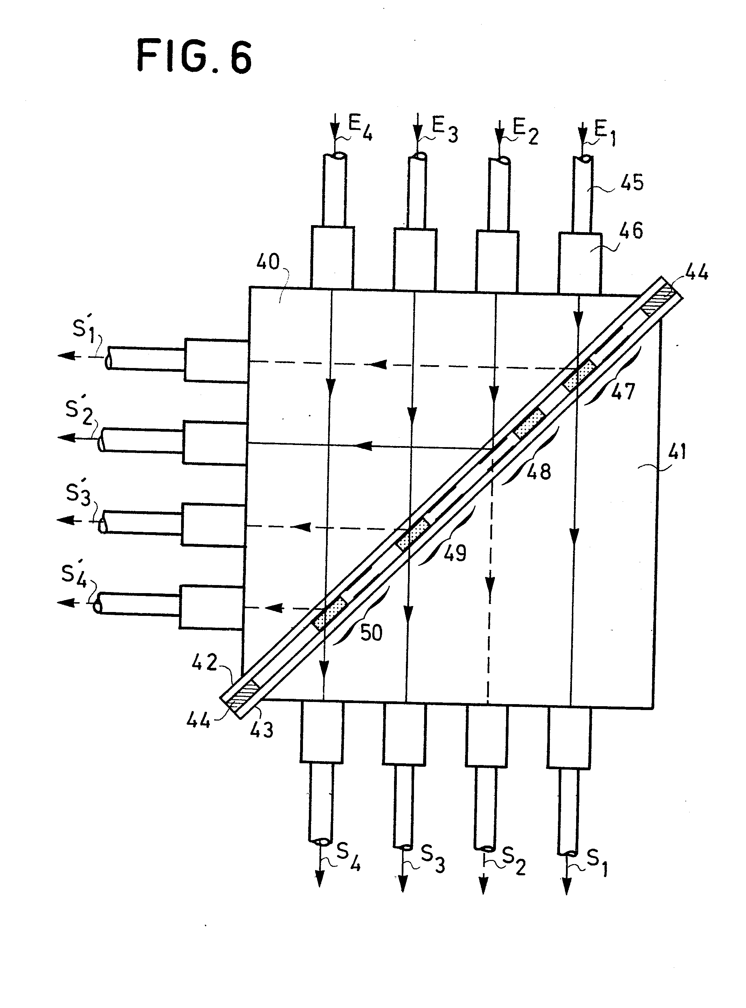

Il entre dans le cadre de l'invention de disposer, dans un même dispositif, plusieurs voies d'entrées de faisceaux lumineux et leurs voies de sortie. La figure 6 représente un dispositif de commutation de quatre faisceaux lumineux. Le dispositif comporte quatre voies d'entrée et huit voies de sortie. Il est constitué de deux lames parallèles 42 et 43 en verre séparées par une fine couche d'air grâce à des entretoises 44. A la différence des dispositifs décrits précédemment, celui de la figure 6 comprend quatre groupes de commutation 47, 48, 49 et 50. Chacun de ces groupes comprend deux jeux d'électrodes susceptibles de faire déplacer un globule de liquide sous l'influence d'une différence de potentiel. Les caractéristiques de chaque groupe et leur fonctionnement ont été décrits plus haut. Sur chacune des lames 42 et 43 sont collés des prismes à réflexion totale 40 et 41 ayant une section en forme de triangle rectangle isocèle. Les voies d'entrée $E_1$, $E_2$, $E_3$ et $E_4$ sont constituées de fibres optiques 45 associées à des lentilles 46 du type à gradient d'indice. A chaque voie d'entrée correspondent respectivement une voie de sortie par transmission $S_1$, $S_2$, $S_3$ et $S_4$ et une voie de sortie par réflexion $S_1'$, $S_2'$, $S_3'$ et $S_4'$. Les voies de sortie sont constituées, de même que les voies d'entrée, de fibres optiques associées à des lentilles du type à gradient d'indice. A titre d'exemple, on a représenté en traits pleins trois faisceaux lumineux dirigés depuis les entrées $E_1$, $E_3$ et $E_4$ vers les sorties $S_1$, $S_3$ et $S_4$, et un faisceau dirigé depuis l'entrée $E_2$ vers la sortie $S_2'$. Ces directions sont imposées par la présence ou l'absence d'un globule, représenté en hachures dans le trajet des faisceaux lumineux. En traits pointillés, on a représenté les trajets imposés aux faisceaux si l'on déplaçait les globules. Dans ce cas, les faisceaux entrant en $E_1$, $E_2$, $E_3$ et $E_4$ seraient respectivement dirigés vers $S_1'$, $S_2$, $S_3'$ et $S_4'$.

D'autres configurations peuvent être envisagées pour réaliser des dispositifs de commutation optique en se basant sur des déplacements de fluides. On peut concevoir, suivant les cas d'espèce, des systèmes où les faisceaux optiques seraient influencés plusieurs fois le long de leur trajet par la présence ou l'absence de globules.

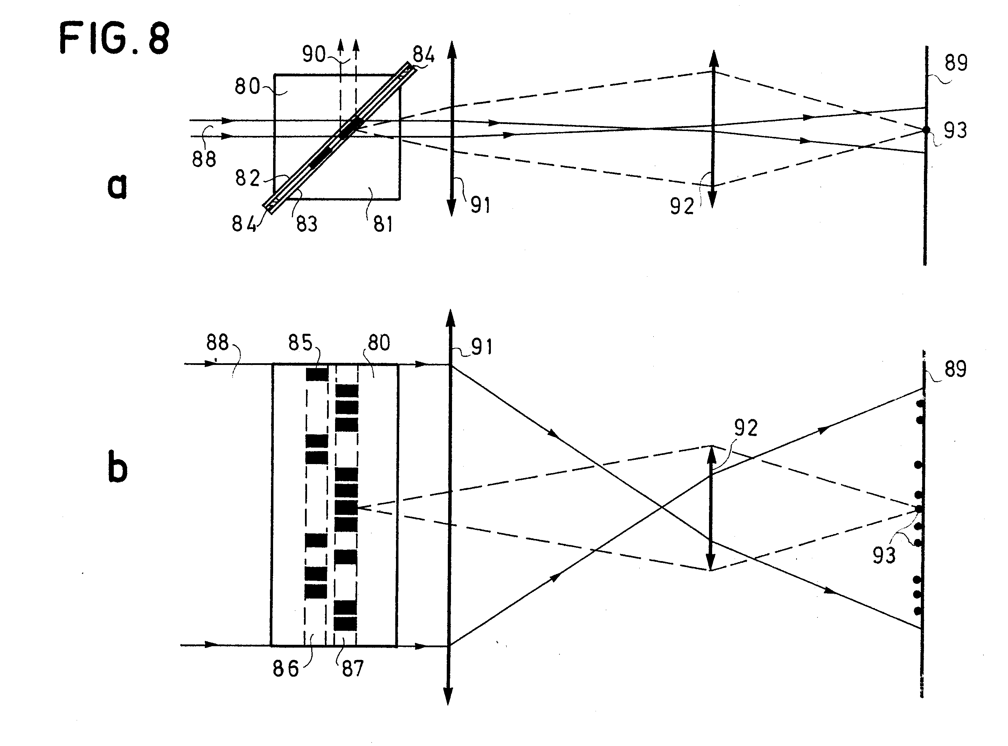

Il est avantageux de donner aux électrodes une géométrie qui permette un déplacement rapide et efficace des globules. La figure 7 montre un exemple de géométrie d'électrodes qui permet de former un globule de liquide dans une région particulière du dispositif où on désire modifier les conditions de propagation d'un faisceau lumineux. Un élément de commutation optique peut être obtenu en plaçant face à face deux tels ensembles d'électrodes. Chacun de ces ensembles comporte sept plots conducteurs référencés de 61 à 67 qui sont reliés à des générateurs de tensions par l'intermédiaire d'autant de conducteurs référencés de 71 à 77. Les liaisons aux générateurs se font de telle sorte qu'une différence de potentiel peut se manifester entre des plots situés en vis-à-vis. Les plots 61 à 66 et les plots correspondants situés en regard permettent le contrôle des volumes qui servent de réservoirs de liquide. Le plot 67 et celui qui lui fait face permettent le déplacement du liquide sur le trajet d'un faisceau lumineux incident par application d'une différence de potentiel appropriée, donc d'un champ électrique. Lorsque l'on supprime la différence de potentiel entre ces plots et qu'on applique une différence de potentiel entre les plots 61 à 66 et ceux qui leur font face, les forces de tension superficielle et les forces dues aux champs électriques jouent le rôle de forces de rappel et entraînent le retrait du liquide hors du trajet du faisceau lumineux. Ce retrait est complet et rapide lorsque les volumes définis par les plots 61 à 66 et leur vis-à-vis ne sont que partiellement remplis. Les valeurs des différences de potentiel entre les plots de retrait du liquide peuvent être identiques ou échelonnées.

Pour améliorer encore le transfert des fluides sous l'influence d'un gradient de champ électrique, il est avantageux que les différents plots se succèdent en présentant des indentations. Sur la figure 7, les indentations sont en forme de dents de scie. Les plots étant, par l'intermédiaire de leurs indentations, encastrés les uns dans les autres, le transfert des globules est sensiblement facilité.

La figure 8 représente schématiquement un dispositif de composition d'une ligne de points lumineux basé sur la commutation optique par déplacement de globules. La figure 8 comporte deux vues du même dispositif : une vue de face , la figure 8(a) et une vue de dessus, la figure 8(b). Le dispositif comprend deux prismes à réflexion totale 80 et 81, à section en forme de triangle rectangle isocèle, collés sur deux lames 82 et 83 séparées par des entretoises 84. Les lames 82 et 83 supportent chacune

12

deux rangées d'électrodes reliées à des générateurs de tension. Les rangées d'électrodes 86 et 87 ont été symbolisées sur la figure 8(b) par des traits pointillés. On a représenté par de petits carrés noircis tels que 85 les globules qui sont susceptibles d'être déplacés d'une rangée 86 à une rangée 87 et inversement. L'emplacement réservé à un globule est considéré comme formant un point élémentaire destiné à entrer dans la composition d'une ligne de points. C'est par exemple la rangée 87 qui va servir à composer la ligne de points désirée. Une nappe lumineuse incidente 88 éclaire la rangée 87 en direction d'un plan de projection 89. Suivant la présence ou l'absence de globules due à une commande électrique, les points élémentaires occultent ou transmettent des parties de la nappe lumineuse sous forme de faisceaux qui impressionnent le plan de projection 89 après passage dans une optique appropriée. Les points de la rangée 87 caractérisés par la présence de globules laissent passer des faisceaux lumineux. Par contre, en absence de globules, les rayons lumineux sont réfléchis par la lame 82 dans la direction 90. L'optique de projection peut consister en une lentille collectrice 91 qui condense la lumière vers un objectif de projection 92 qui donne une imagerie sur le plan de projection 89 par combinaison des points projetés 93.

Le dispositif de composition selon l'invention possède plusieurs avantages. D'abord, la source lumineuse qui produit la nappe peut être une lampe ordinaire et non pas nécessairement un laser comme dans certains appareillages concurrents grâce au fait que l'efficacité optique est excellente et ne nécessite pas la monochromaticité. Ensuite, la nappe lumineuse éclairant, à travers un prisme longitudinal une suite de paires d'électrodes transparentes disposées en rangée, la longueur de la rangée peut être égale à celle de la ligne à reproduire, ce qui simplifie le système optique. Enfin, il est possible de se servir des rayons réfléchis par le prisme 80 pour recueillir un négatif de l'imagerie du plan de projection.

On peut utiliser la composition d'une telle ligne pour l'éclairage de dispositifs photosensibles en vue de la reproduction point par point d'images par des procédés tels que la photographie, la photocopie, la télécopie, etc ...

13

## REVENDICATIONS

1. Dispositif de commutation optique d'au moins un faisceau lumineux incident par des moyens commutateurs à commande électrique, les moyens commutateurs consistant à placer sur le trajet dudit faisceau soit un premier fluide ($f_1$) provoquant la réflexion du faisceau, soit un second fluide ($f_2$) provoquant sa transmission, lesdits fluides étant contenus dans un espace de confinement défini par des éléments transparents et n'étant pas miscibles, l'un desdits fluides ayant une structure globulaire noyée dans la structure lacunaire de l'autre fluide, caractérisé en ce que les fluides sont des fluides diélectriques possédant des permittivités diélectriques ($\varepsilon_1, \varepsilon_2$) distinctes, le dispositif comprenant également des moyens inducteurs d'un gradient de champ électrique faisant converger le fluide ayant la plus forte permittivité vers une région de l'espace de confinement soumise au champ électrique.

2. Dispositif de commutation optique selon la revendication 1, caractérisé en ce que les éléments définissant l'espace de confinement sont constitués de deux lames de verre (1, 2).

3. Dispositif de commutation optique selon l'une des revendications 1 ou 2, caractérisé en ce que les moyens inducteurs comprennent au moins deux couples d'électrodes (5, 6 et 10, 11), chaque couple formant condensateur, lesdits fluides jouant le rôle de diélectriques par rapport aux couples d'électrodes.

4. Dispositif de commutation optique selon l'une quelconque des revendications 1 à 3, caractérisé en ce que les éléments définissant l'espace de confinement sont recouverts d'un revêtement non mouillant (3, 4).

5. Dispositif de commutation optique selon l'une quelconque des revendications 1 à 4, caractérisé en ce que les éléments définissant l'espace de confinement comprennent au moins un prisme à réflexion totale (20, 21).

6. Dispositif de commutation optique selon la revendication 5, caractérisé en ce que ledit prisme est collé sur l'une desdites lames, le collage contribuant à l'adaptation d'indice entre le prisme et ladite lame.

7. Dispositif de commutation optique selon l'une des revendications 5 ou 6, caractérisé en ce que ledit prisme a subi un traitement de surface anti-reflet.

14

8. Dispositif de commutation optique selon l'une quelconque des revendications 5 à 7, caractérisé en ce que ledit prisme a une section en forme de triangle rectangle isocèle.

9. Dispositif de commutation optique selon l'une quelconque des revendications 1 à 8, caractérisé en ce que le premier fluide ($f_1$) est de l'air, le second fluide ($f_2$) étant un hydrocarbure.

10. Dispositif de commutation optique selon la revendication 9, caractérisé en ce que ledit second fluide est un hydrocarbure de type alcane comprenant de 5 à 25 atomes de carbone.

11. Dispositif de commutation optique selon la revendication 9, caractérisé en ce que ledit second fluide est un hydrocarbure de type cétone ou un dérivé nitré.

12. Dispositif de commutation optique selon l'une quelconque des revendications 1 à 11, caractérisé en ce que les faisceaux lumineux incident et commuté sont véhiculés par des fibres optiques (30, 31, 32).

13. Dispositif de commutation optique selon la revendication 12, caractérisé en ce qu'il est prévu de placer des lentilles à gradient d'indice (33, 34, 35) pour assurer la liaison optique entre les fibres optiques et les éléments définissant l'espace de confinement.

14. Dispositif de commutation optique selon l'une quelconque des revendications 1 à 13, caractérisé en ce que lesdites électrodes sont formées d'une succession de plots (61 à 67) s'encastrant les uns dans les autres suivant des indentations.

15. Dispositif de commutation optique selon l'une quelconque des revendications 1 à 14, caractérisé en ce qu'il comporte plusieurs moyens commutateurs afin d'assurer la commutation d'autant de faisceaux lumineux.

16. Dispositif de composition d'une ligne de points, caractérisé en ce qu'il comprend un dispositif de commutation optique selon la revendication 15, et des moyens optiques (91, 92) permettant d'impressionner un plan de projection (93).

0136193

1/6

FIG.1

FIG.2

FIG. 3

# FIG.4

a

b

FIG. 5

FIG. 7

FIG.6

# FIG.8

a

b

# 0136193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | APPLIED PHYSICS LETTERS, vol. 40, no. 1, 1 janvier 1982, pages 4-6, American Institute of Physics, New York, USA; J.L. JACKEL et al.: "Electrowetting optical switch" * En entier * | 1,3,13 | G 02 B    6/24 |
| Y | EP-A-0 025 097 (IBM) * Revendications; figures * | 1,2 | |
| Y | US-A-3 874 779 (F.L. THIEL) * Colonne 3, lignes 5-16; revendications; figures * | 1,9 | |
| A | US-A-3 572 896 (S. BERTRAM) * Revendications 1,4; figures * | 1,15, 16 | |
| A | EP-A-0 075 704 (SIEMENS) * Revendications 1-4,6,9,11,16-19,22,25 * | 1 | **DOMAINES TECHNIQUES RECHERCHES (Int. Cl.4)** G 02 B    6/24 G 02 F |
| A | FR-A-2 352 364 (IBM) * Page 5, lignes 20-39; revendications 6-11; figure 1A * | 4 | |

---            -/-

Le présent rapport de recherche a été établi pour toutes les revendications

| Lieu de la recherche LA HAYE | Date d'achèvement de la recherche 18-10-1984 | Examinateur PFAHLER R. |
|---|---|---|

0136193

| DOCUMENTS CONSIDERES COMME PERTINENTS | | | Page 2 |
|---|---|---|---|
| Catégorie | Citation du document avec indication, en cas de besoin, des parties pertinentes | Revendication concernée | CLASSEMENT DE LA DEMANDE (Int. Cl.4) |
| A | IBM TECHNICAL DISCLOSURE BULLETIN, vol. 24, no. 3, août 1981, pages 1493-1495, New York, USA; F. GFELLER: "Bypass switch for optical fiber ring network" * En entier * | 1 | |
| A | EP-A-0 042 907 (IBM) * Résumé; figures * | 1 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 18-10-1984 | PFAHLER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03. 82